(19) Europäisches Patentamt
European Patent Office
Office européen des brevets

(11) **EP 4 752 851 A1**

(12) **EUROPEAN PATENT APPLICATION**

(43) Date of publication:
**03.06.2026 Bulletin 2026/23**

(21) Application number: **24215916.8**

(22) Date of filing: **27.11.2024**

(51) International Patent Classification (IPC):
**G06V 10/82** (2022.01)   **G06V 40/10** (2022.01)
**G06V 20/52** (2022.01)

(52) Cooperative Patent Classification (CPC):
**G06V 40/103; G06V 10/82; G06V 20/52**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Qumea AG
4500 Solothurn (CH)**

(72) Inventors:
- **REBSAMEN, Philipp
  3210 Kerzers (CH)**
- **PAULI, Adrian
  3400 Burgdorf (CH)**
- **REBER, Jonas
  3303 Jegenstorf (CH)**

(74) Representative: **Keller Schneider
Patent- und Markenanwälte AG
Monbijoustrasse 68
Postfach
3000 Bern 14 (CH)**

(54) **METHOD FOR IDENTIFYING A FALL EVENT OF A SUBJECT FROM A PLURALITY OF FRAMES OF THREE-DIMENSIONAL RADAR DATA**

(57)    Fall events of a subject are identified from a plurality of frames of three-dimensional radar data covering a time interval, each of the frames comprising three-dimensional point cloud information relating to a point in time. First, a location of the subject is determined from the three-dimensional radar data. A local volume (21) is defined around the determined location. The local volume is subdivided into a number of subvolumes (22). For each of the plurality of frames a number of points is determined for each of the subvolumes (22), based on the three-dimensional point cloud. Then, a spatio-temporal feature vector is generated from the determined numbers of points. Finally, the feature vector is fed to a supervised machine learning method to obtain a classification result relating to the probability of the fall event of the subject in the covered time interval.

**Fig. 3A**

EP 4 752 851 A1

**Description**

**Technical Field**

The invention relates to a method for identifying a fall event of a subject from a plurality of frames of three-dimensional radar data covering a time interval, each of the frames comprising three-dimensional point cloud information relating to a point in time. The invention further relates to a computer program and to an apparatus for identifying a fall event of a subject.

**Background Art**

In our fast aging population, falls are a common but often overlooked cause of injury of patients in health care facilities.

Falls are a major threat to the health of the elderly and often cause the affected person to lose their confidence and/or independence. Among older adults, associated medical comorbidities correlate to an increased propensity to fall, and in turn, increased susceptibility to injury. Data from Swiss hospitals show that of all recorded fall events in a year, more than 35% lead to injuries (S. Thomman, L. Roos, J. Riedweg, and N. S. Bernet, Nationale Prävalenzmessung Sturz und Dekubitus. Nationaler Vergleichsbericht Messung 2022 - Erwachsene. Nationaler Verein für Qualitätsentwicklung in Spitälern und Kliniken (ANQ), 2023.). Hip fractures are among the most common injuries caused by falls and lead to significantly increased costs and overall burden of the healthcare system.

To provide the best possible assistance and improve patient outcome, detecting falls in a timely manner is thus of great importance for personnel and patients alike. Recently, several fall detection solutions have emerged which no longer rely on wearable devices or pressure-sensitive mats on the floor.

Some of the solutions are based on camera images. However, these potentially invade the privacy of the patients.

Others are based on millimeter-wave (mmWave) radar signals (L. Liu, M. Popescu, M. Skubic, M. Rantz, T. Yardibi, and P. Cuddihy, "Automatic fall detection based on doppler radar motion signature," in 2011 5th International Conference on Pervasive Computing Technologies for Healthcare (PervasiveHealth) and Workshops. IEEE, 2011, pp. 222-225., M. G. Amin, Y. D. Zhang, F. Ahmad, and K. D. Ho, "Radar signal processing for elderly fall detection: The future for in-home monitoring," IEEE Signal Processing Magazine, vol. 33, no. 2, pp. 71-80, 2016.). The fundamental concept in radar systems is the transmission of an electromagnetic signal through radio waves and the subsequent pick up of echoes reflected by objects in its path. Via the Doppler shift of the signal information information about an object's location and speed is obtained. Millimeter wave radars are able to detect even very small motions like the displacement of the chest during breathing or the beating heart through the surface of the skin. They avoid privacy problems that are present when camera images are recorded and processed.

However, most current fall classification methods are based on very few real-world samples. The challenges in radar-based fall detection lie in the correct classification between true fall events and activities of daily living (ADL) that only look like a person is falling (e.g. picking up something from the floor).

**Summary of the invention**

It is thus the object of the invention to create a method for identifying a fall event of a subject pertaining to the technical field initially mentioned, that allows for a reliable classification of fall events.

The solution of the invention is specified by the features of claim 1. According to the invention, the method comprises the steps of:

a) determining a location of the subject from the three-dimensional radar data;

b) defining a local volume around the determined location;

c) subdividing the local volume into a number of subvolumes;

d) for each of the plurality of frames determining a number of points for each of the subvolumes, based on the three-dimensional point cloud;

e) generating a spatio-temporal feature vector from the determined numbers of points; and

f) feeding the feature vector to a supervised machine learning method to obtain a classification result relating to the probability of the fall event of the subject in the covered time interval.

The invention is further directed to a computer program comprising instructions which, when the program is executed by a computer, cause the computer to carry out this method.

It is further directed to an apparatus for identifying a fall event of a subject, comprising

a) a radar system for generating frames of three-dimensional radar data, each of the frames comprising three-dimensional point cloud information relating to a point in time;

b) a first processing module adapted to determine a location of the subject from the three-dimensional point cloud;

c) a second processing module adapted to define a local volume around the determined location, to subdivide the local volume into a number of subvolumes and to determine a number of points for each of the subvolumes, based on the three-dimensional point cloud;

d) a third processing module adapted to generate a spatio-temporal feature vector from the determined numbers of points for a number of frames covering a time interval;

e) a machine learning module adapted to process the spatio-temporal feature vector using a supervised machine learning method to obtain a classification result relating to the probability of the fall event of the subject in the covered time interval.

Preferably, the radar system is an mmWave radar system. Such systems are compact and provide the required spatial resolution for the monitoring of subjects and their movements. The radar system may include a sensor unit that is attachable to the ceiling of a room, thus allowing for the monitoring of the subjects present in this room or an area thereof. Corresponding sensors are available e. g. from the applicant Qumea AG, Solothurn, Switzerland. Presently, they are used to track the location and activity of people in particular in hospitals and nursing homes. Based on this information, the risk for fall events may be estimated. The present invention allows for the reliable classification of actual, recorded events.

The location of the subject may be obtained from the radar system, as part of the three-dimensional radar data. In this case, the first processing module is part of the radar system. Alternatively, it may be determined from the three-dimensional point cloud. In principle, the location does not need to be determined for each of the frames of radar data. It may be sufficient to determine the position from a single frame of the plurality of frames, e. g. the first frame in time or a frame in the middle of the interval covered by the plurality of frames.

The actual input data, i. e. the point clouds, are of unknown length at runtime. However, defining a local volume around the determined location, the subdivision into a predetermined number of subvolumes and the processing of point numbers allows for fitting a temporal sequence of points into a well-defined form, which is suitable as an input vector for a machine learning method. In particular, all points of the three-dimensional point cloud located outside the local volume are discarded for the further processing.

When generating the spatio-temporal feature vector, the determined numbers of points assigned to each subvolume may be directly used. However, it is possible to use a processed result obtained from the determined numbers of points in the preceding step, where the processing may involve e. g. filtering and/or weighting. Both filtering and weighting may be based on additional information that is available for the individual points, e. g. signal-to-noise ratio, velocity, confidentiality parameters, etc.

In addition to the points, further information may be used for generating the spatio-temporal feature vector.

The inventive method allows for a reliable identification of fall events in different settings. It may be used e. g. in hospitals, nursing homes, other public spaces, private accommodations, etc. The method and apparatus allow for leveraging numerous actual fall events from many different environments. The data is captured by an anonymous, contactless system, based on existing sensor hardware.

Preferably, the supervised machine learning method is a convolutional neural network with pre-trained weights. Tests have shown that such machine learning methods allow for a reliable classification of fall events based on the numbers of points in the point cloud in subvolumes located around a determined location of the subject.

Implementations of such CNN methods are readily available. Among those are variants that are optimized to run on comparably small and energy-efficient processors such as those found in mobile devices, e. g. smartphones.

Other classifiers may be used, such as other neural networks, support-vector machines or k-nearest neighbors algorithms.

Preferably, the classification result obtained from the supervised machine learning method is binary (0: no fall, 1: fall). In this case, no further processing of the classification is required, but steps that are required in the event of a fall, e. g. triggering an alarm, may be immediately taken.

Alternatively, the classification result may have more than two possible values, where different "fall" values relate to different probabilities and/or types of falls.

In a preferred embodiment, the plurality of frames cover a time interval of at least 2 s, in particular of at least 5 s. Tests have shown that fall events may be reliably identified if a corresponding interval is covered, in particular because the period preceding the actual potential fall event may provide relevant information for the classification.

The number of frames/s (resolution in time) is preferably at least 4, in particular at least 6. Therefore, the number of frames taken into account for the classification will be preferably at least 8, more preferably at least 12, most preferably at least 30.

Preferably, the local volume is centered about the determined location, and in particular set to be constant within the time interval covered by the plurality of radar frames. This ensures that the relevant subvolumes are considered for the buildup of the spatio-temporal feature vector.

Variants are possible: In a first variant, the center of the local volume is shifted relative to the determined location, e. g. in the direction of a motion vector of the subject at the time of the determination of the subject's location. In a second variant, the center of the local volume is non-stationary and follows an updated location of the subject within the time interval covered by the plurality of radar frames.

Preferably, an extension of the local volume is symmetrical about at least two perpendicular planes running through the determined location. This ensures in particular that no anisotropies with respect to different horizontal directions are introduced. Again, the local volume may be chosen to be non-symmetrical, e. g. set to have an extension that is longer in a direction of a motion vector of the subject at the beginning of the considered time interval.

In a preferred embodiment, the local volume is cylinder-shaped with a cylinder axis extending in a vertical direction. Tests have shown that this allows for reliably capture the information that is required to classify potential fall events.

Other shapes are possible, e. g. cuboids, spheres or ellipsoids.

Preferably, a cylindrical or spherical coordinate system is defined around the determined location and the subvolumes are defined as cylindrical or spherical voxels. In particular, the coordinate system is adapted to the shape of the local volume. In a particularly preferred variant, the local volume is cylinder-shaped with a cylinder axis extending in the vertical direction and a cylindrical coordinate system is used, the reference axis being the vertical axis of the cylinder-shaped local volume. In this case, subvolumes are cylinder ring segment layers including all points of the point cloud being in certain ranges of radius, azimuth and height.

This makes the definition of the subvolume voxels and the processing of the numbers of points particularly easy.

Alternatively, other coordinate systems may be used, e. g. Cartesian coordinates.

In a preferred embodiment, for generating the spatio-temporal feature vector the number of points in a given subvolume is adjusted based on the numbers of points in other subvolumes neighboring the given subvolume in space and/or in time. This leads to a sort of spatial and/or temporal blurring, reduces quantisation effects and makes the method more robust to unseen data. In particular, the numbers of points in subvolumes directly neighboring the given subvolume are used, where diagonally adjacent subvolumes may be taken into account or not. In further variants, next-to-neighbor subvolumes (or even further subvolumes) may be used for the blurring. The weight of more distant subvolumes may be reduced when adjusting the number of points. Similarly, different weights may be used for spatially neighboring subvolumes compared to temporally neighboring subvolumes.

Alternatively, there is no adjustment of the numbers of points.

In a preferred embodiment, the feature vector is transformed into a two-dimensional image with multi-valued pixel values (e. g. RGB values) and the two-dimensional image is fed to a convolutional neural network optimized for the processing of image data. Such CNN are readily available for image/video applications and provide good results. Therefore, transforming the feature vector accordingly, allows for using available solutions for image/video classification.

Alternatively, a supervised machine learning method may be used that is not applied to image data but directly to the specific spatio-temporal feature vectors.

Preferably, identification of the fall event is triggered based on a development of a position of a radar target tracked over time. This means it is not required that the frames are continuously processed for the identification of fall events, e. g. by applying a moving window to the succession of frames and successively sending groups of frames to the processor. Instead, the three-dimensional radar data is monitored for an indication of a potential fall event, e. g. for the rapid decrease of a height of the center of gravity of a radar target, and the identification of the event is only triggered if such an indication is detected. Preferably, the frame data is buffered for a certain time interval, and the plurality of frames that is processed for the indication includes a number of frames relating to a time interval before the triggering event, and preferably also a further number of frames relating to a time interval after the triggering event.

In a preferred embodiment, the point cloud information relating to a given frame of three-dimensional radar data is analyzed for a static characteristic indicative for a potential fall event, a number of frames including the given frame and frames preceding the given frame are analyzed for a dynamic characteristic indicative for a potential fall event if the static characteristic is present, and the identification of the fall event is triggered if the dynamic characteristic is present.

This continuous monitoring of frames may involve the analysis for the static characteristic(s) of each frame as soon as the respective point cloud information is available or it may be carried out for a certain subset of frames, e. g. every n-th frame. The static characteristic indicative for a potential fall event may be a height of a center of gravity of a cluster in the point cloud, wherein a cluster having a center-of-gravity height below a certain threshold may be indicative of a person positioned on the ground. Further information on the point cloud, including the number of points, their spatial distribution or density may be taken into account for the identification of the static characteristic(s).

The analysis for the dynamic characteristic(s), involving a sequence of frames, in particular the given frame and a sequence of frames directly preceding the given frame, is only carried out if the static characteristic is present. This saves computational costs. Basically, during this second step, it is evaluated whether the cluster relating to the static characteristic(s) originated in a way that is indicative for a fall event. The dynamic criteria may involve an initial height threshold of the cluster, temporal variations in height, valocities, consistency in data points over time, and other relevant factors. Only if this characteristic is identified as well, the identification of the fall event as described above is triggered.

The criteria are chosen in such a way that false negatives are avoided, i. e. cases where the presence or absence of a fall event cannot be clearly determined directly from the cloud data will always be assessed using the more thorough approach of the invention.

Nevertheless, in principle the described approach of triggering a fall event identification based only if the point cloud data fulfils static and dynamic criteria may be used independently of the specific method used in the context of the invention, i. e. without necessarily applying a supervised machine learning method to a spatio-temporal feature vector. A corresponding method for identifying a fall event of a subject from a plurality of frames of three-dimensional radar data covering a time interval, each of the frames comprising three-dimensional point cloud information relating to a point in time, may be characterized by the following steps:

a) analyze the point cloud information relating to a given frame of three-dimensional radar data for a static characteristic indicative for a potential fall event;
b) if the static characteristic is present, analyze a number of frames including the given frame and frames preceding the given frame for a dynamic characteristic indicative for a potential fall event;
c) if the dynamic characteristic is present, trigger a fall event identification for classifying the plurality of frames of three-dimensional radar data into a fall event class and a non-fall event class.

Similarly, an apparatus for identifying a fall event of a subject would comprise:

a) a radar system for generating frames of three-dimensional radar data, each of the frames comprising three-dimensional point cloud information relating to a point in time;

b) a first processing module adapted to analyze the point cloud information relating to a given frame of three-dimensional radar data for a static characteristic indicative for a potential fall event;

c) a second processing module adapted to analyze a number of frames including the given frame and frames preceding the given frame for a dynamic characteristic indicative for a potential fall event;

d) a third processing module for classifying the plurality of frames of three-dimensional radar data into a fall event class and a non-fall event class,

wherein the second processing module is controlled to analyze the number of frames if the static characteristic is present and wherein the third processing module is controlled to classify the plurality of frames if the static characteristic and the dynamic characteristic are present.

In addition, the method may involve a step to check for repeated detection of similar clusters at the same location within a larger, predefined time frame. This step is designed to differentiate between transient events and sustained conditions, such as intentional placement on the ground.

Other advantageous embodiments and combinations of features come out from the detailed description below and the entirety of the claims.

## Brief description of the drawings

The drawings used to explain the embodiments show:

Fig. 1 A block diagram of an inventive apparatus for identifying a fall event of a subject from a plurality of frames of three-dimensional radar data;

Fig. 2 a flow chart of an inventive method for identifying a fall event of a subject from a plurality of frames of three-dimensional radar data;

Fig. 3A    the local volume around a located subject and its subdivision into subvolumes; and

Fig. 3B    the neighboring spatial subvolumes taken into account for adjusting the number of points in a certain subvolume.

In the figures, the same components are given the same reference symbols.

**Preferred embodiments**

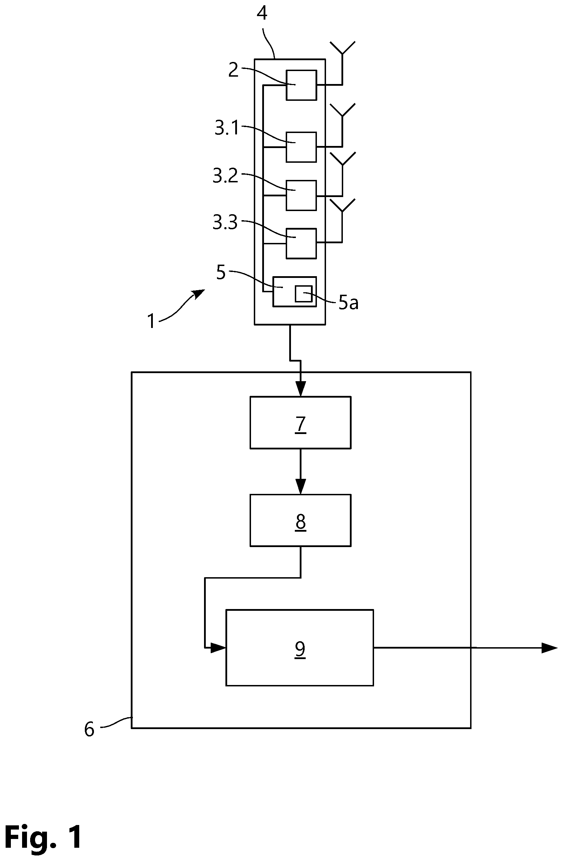

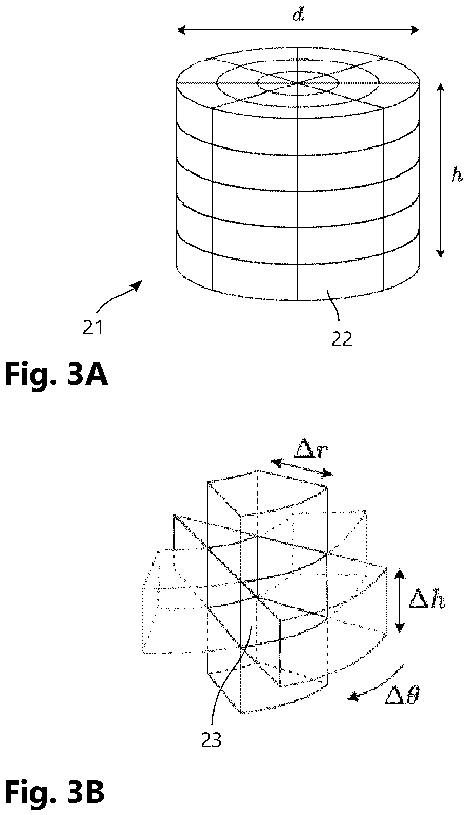

Figure 1 is a block diagram of an inventive apparatus for identifying a fall event of a subject from a plurality of frames of three-dimensional radar data. The radar system 1 is a MIMO UWB (Multiple Input Multiple Output Ultrawideband) radar system with a center frequency between 2 and 75 GHz. It includes an mmWave radar transmitter 2 and three radar transceivers 3.1, 3.2, 3.3 accommodated in a housing 4 in a certain distance from each other such that differences with respect to incoming signal phase are caused. The housing may be attached e. g. to the ceiling of a room to be monitored for fall events. The housing 4 further accommodates a processor 5. The processor 5 controls the transmitter 2 and the receivers 3.1, 3.2, 3.3 and processes the data received from the receivers 3.1, 3.2, 3.3. In a manner known as such, the processor 5 generates three-dimensional point clouds representing a three-dimensional radar picture at a certain point in time. As well, the processor 5 includes a first processing module 5a that generates position estimates for objects such as individual subjects present in the field of view of the radar system 1. The radar system 1 further includes a power supply and and interface for exporting radar data or further data derived from the radar signals to further devices.
This data from the radar system 1 is fed to a processing system 6 in order to identify fall events from the radar data. In a second processing module 7, a local volume is defined around the position estimate of each object. The local volume is subdivided into a number of subvolumes and a number of points in the three-dimensional point cloud is determined for each of these subvolumes. These steps are described in more detail below.
In a third processing module 8, a spatio-temporal feature vector is generated from the determined numbers of points for a number of frames covering a time interval. Again, this is described in more detail below.
The spatio-temporal feature vector is fed to a machine learning module 9. In this module, the feature vector is classified into a "fall" class or into a "non fall" class. The result of the classification is fed to a monitoring system, e. g. in order to trigger an alarm.
It is to be noted that the modules and processors may be realized by software running on a server, a general purpose or dedicated computer. Some or all of the modules may be bound to dedicated hardware units. Similarly, some of the modules may be part of the radar system, whereas other modules are part of external components. It may be advantageous to run some of the modules on a cloud server to reduce the required local computing power and/or to centralize data storage. The processing system 6 may be integrated into the radar system 1 and even be accommodated in the housing 4, or it is a standalone system or implemented by software running on a central server connected to the radar system 1.

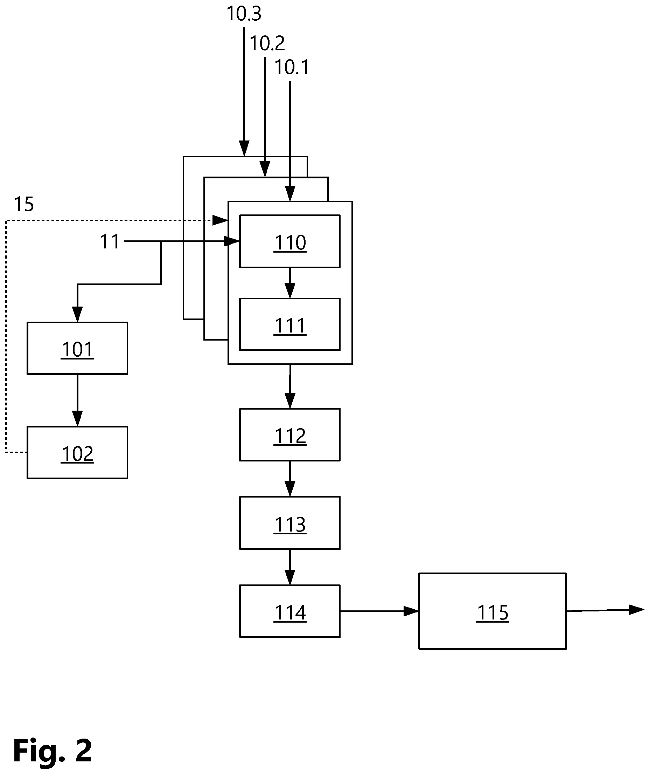

Figure 2 is a flow chart of an inventive method for identifying a fall event of a subject from a plurality of frames of three-dimensional radar data, using the apparatus described in connection with Figure 1. Radar frames 10.1, 10.2, 10.3 relating to successive points in time are received from a radar system. Each of the frames 10.1, 10.2, 10.3 comprise a three-dimensional point cloud representing objects in the field of view of the radar system. In addition, each frame 10.1, 10.2, 10.3 comprises a position 11 of an object (or a list of positions of several objects). In the context of the described method, the frame rate is 8 fps, i. e. subsequent frames that are further processed have a temporal offset of 125 ms.
The received positions 11 of the objects are stored in a buffer memory (step 101) and the positions of the subjects stored in the buffer are analyzed for a rapid decrease of the height of the center of gravity of a radar target in order to detect potential fall events (step 102). If a fall event cannot be excluded based on this analysis, the fall detection algorithm described in the following is triggered (trigger 15). It essentially consists of a first phase in which a spatio-temporal feature vector is generated and of a second phase in which the feature vector is classified by a pretrained convolutional neural network.
In a first step 110, for each of the identified objects, a local volume 21 is defined (see Figure 3A). The shape of this local volume is cylindrical, where the cylinder axis is vertical and passes through the estimated position of the object at a first frame 10.1. The dimensions of the cylinder, i. e. its diameter d=2r and its height h are predetermined. The base of the cylinder coincides with the floor of the monitored space, and the height h matches typical heights of individuals, e. g. h=2.5 m to be on the safe side. A suitable value for d might be 3 m to reliably cover the spatial volume in which typical fall events take place. The local volume is segmented into subvolumes 22 as shown in Figure 3A: Each of the subvolumes covers a certain range of radial distance $[r_i, r_{i+1}[$ . a certain range of height $[h_j, h_{j+1}[$ and a certain azimuth range $[\theta_k, \theta_{k+1}[$, i. e. each of the subvolumes is characterized by three integer values i, j, k, where the number of subvolumes is predetermined. In the described example, the cylinder features five height bins, three layers and eight slices, resulting in a total of 120 non-overlapping subvolumes 22.

Each of the subvolumes 22 defines a bin. The cylinder-shaped local volume 21 is a point cloud descriptor and will be applied to all subsequent frames that are processed in the fall identification method presently described. The number of frames processed in the method matches the number of frames that have been used for training the classifier, i. e. once the classifier has been trained, the number of frames that will be processed to obtain the feature vector is predetermined. In the given example, 75 frames are considered, covering about 9 s at 8 fps. If the frame rate of the radar system used in production does not match the frame rate of the data that had been used for training the neural network, the radar data may be interpolated and/or frames may be left out from further analysis in order to obtain point cloud data with the same temporal resolution.

In a next step 111, for each of the frames the number of points in the point cloud in each respective bin (subvolume) is counted. Furthermore, a blur factor is applied. In order to do so, for each frame, all points inside the cylinder are assigned to a height-, slice- and layer bin index using their polar coordinates $(\rho, \theta)$ with reference to the cylinder circle and their original height information (z). All points outside of the cylinder are discarded.

$$i = \left\lfloor \frac{\rho}{\Delta r} \right\rfloor,$$

$$j = \left\lfloor \frac{z}{\Delta h} \right\rfloor$$

and

$$k = \left\lfloor \frac{\theta - 2\pi \cdot \left\lfloor \frac{\theta}{2\pi} \right\rfloor}{\Delta \theta} \right\rfloor.$$

To improve robustness to unseen data, a blur model for neighbouring bins is introduced during bin assignment. Figure 3B shows all possible direct neighbours of a centrally located bin 23 in a cylinder with three layers. For each neighbour dimension (radius, height and azimuth), a different blur factor can be set. The blur factor is a simple integer value which is used to increment the count of a single point inside the original bin. For example, if the blur factor is set to b = 4, then the count for the specific neighbour bin would be increased by the value of b for every point that is detected in the original bin. The original bin in turn has a separate increment factor as well to allow for maximum optimization. To include the temporal aspect in the blurring as well, the original bin 23 will also be incremented by a specific blur factor in the same bin in the frame before and after the current frame (if applicable) (step 112).

After all frames have been processed, a sequence of cylindrical point cloud descriptors containing the blur-adjusted count values for each frame is available. The descriptors have a well-defined form with a predetermined number of values.

A spatio-temporal feature vector is now generated from these values. As this feature vector will be processed by a classifier which is adapted to the classification of image data, the feature vector will assume the form of image data. In order to obtain this, the bin values are first normalized and converted to a value inside of the RGB color range (step 113). This is done by splitting the RGB values to separate the channels for each color, rescaling the color values from [0.0, 255.0] to [0.0, 1.0] and normalizing using a mean of [0.485, 0.456, 0.406] and a standard deviation of [0.229, 0.224, 0.225]. Once normalization is performed, the cylinder bins are flattened to a one-dimensional list of values which represent a single row of the final image (step 114). Hence the number of input frames is equal to the final image height feeding into the classifier. The total amount of bins represents the width of the final image feeding into the classifier.

Classification is done in step 115 using MobileNetV3 which is a convolutional neural network for vision applications that is designed especially for the use on mobile and embedded systems (A. Howard, M. Sandler, G. Chu, L.-C. Chen, B. Chen, M. Tan, W. Wang, Y. Zhu, R. Pang, V. Vasudevan, Q. V. Le, and H. Adam, "Searching for mobilenetv3," 2019.). It was released by Google Inc. in November 2019.

The variant MobileNetV3-Large which forms the basis for the classifier used in the described method is specified as follows:

| Input | Operator | exp size | # out | SE | NL | s |
|---|---|---|---|---|---|---|
| $224^2$ x 3 | conv2d | - | 16 | - | HS | 2 |
| $112^2$ x 16 | bneck, 3x3 | 16 | 16 | - | RE | 1 |

(continued)

| Input | Operator | exp size | # out | SE | NL | s |
|---|---|---|---|---|---|---|
| $112^2$ x 16 | bneck, 3x3 | 64 | 24 | - | RE | 2 |
| $56^2$ x 24 | bneck, 3x3 | 72 | 24 | - | RE | 1 |
| $56^2$ x 24 | bneck, 5x5 | 72 | 40 | yes | RE | 2 |
| $28^2$ x 40 | bneck, 5x5 | 120 | 40 | yes | RE | 1 |
| $28^2$ x 40 | bneck, 5x5 | 120 | 40 | yes | RE | 1 |
| $28^2$ x 40 | bneck, 3x3 | 240 | 80 | - | HS | 2 |
| $14^2$ x 80 | bneck, $3\times3$ | 200 | 80 | - | HS | 1 |
| $14^2$ x 80 | bneck, 3x3 | 184 | 80 | - | HS | 1 |
| $14^2$ x 80 | bneck, 3x3 | 184 | 80 | - | HS | 1 |
| $14^2$ x 80 | bneck, 3x3 | 480 | 112 | yes | HS | 1 |
| $14^2$ x 112 | bneck, 3x3 | 672 | 112 | yes | HS | 1 |
| $14^2$ x 112 | bneck, 5x5 | 672 | 160 | yes | HS | 2 |
| $7^2$ x 160 | bneck, 5x5 | 960 | 160 | yes | HS | 1 |
| $7^2$ x 160 | bneck, 5x5 | 960 | 160 | yes | HS | 1 |
| $7^2$ x 160 | conv2d, 1x1 | - | 960 | - | HS | 1 |
| $7^2$ x 960 | pool, 7x7 | - | - | - | - | 1 |
| $1^2$ x 960 | conv2d 1x1, NBN | - | 1280 | - | HS | 1 |
| $1^2$ x 1280 | conv2d 1x1, NBN | - | k | - | - | 1 |

In this table, SE denotes whether there is a Squeeze-And-Excite in that block. NL denotes the type of nonlinearity used (HS: h-swish, RE: ReLU). S denotes stride. NBN stands for no batch normalization.

The model is slightly modified so that instead of a general purpose classifier it becomes a binary classifier built for this specific task. For this purpose, the last but one step features only 960 output nodes and the last step is binary, i. e. the last two rows read

| Input | Operator | exp size | # out | SE | NL | s |
|---|---|---|---|---|---|---|
| | | ... | | | | |
| $1^2$ x 960 | conv2d 1x1, NBN | - | 960 | - | HS | 1 |
| $1^2$ x 1280 | conv2d 1x1, NBN | - | 2 | - | - | 1 |

Therefore, the classifier classifies the spatio-temporal feature vector into a "fall" or "no fall" class.

The classifier was trained leveraging an extensive fall dataset captured by the QUMEA patient monitoring solution deployed in more than 30 institutions worldwide. In a preliminary study, a training dataset including merely 321 events (including fall and no-fall events) was included. The samples were recorded with a frame rate of 8 FPS and each contained 75 frames per recording, resulting in about 9 s of continuous input. The estimated fall position was included with every recording. Every recording also featured a coherent xyz coordinate system for the point cloud contained in the radar frames and the estimated fall position. In order to enhance the number of samples for training, temporal, spatial and rotational jitter was introduced. Testing the resulting model showed that fall events could be reliably recognized with a substantially reduced number of false positives compared to known techniques. It is to be expected that even better results can be achieved when larger training datasets are used.

The invention is not restricted to the specific embodiment described above. In particular, convolutional neural networks with another specification or even other types of machine learning methods may be used. Depending on the used classifier, the feature vector does not need to match an RGB image. Parameters such as frame rate, number of frames, size and/or shape of the local volume may be adapted.

Similarly, instead of a MIMO UWB radar system usual phased arrays may be used and/or wideband radars having smaller bandwidths such as about 150 MHz. The frequency of the radar system may be adjusted to the purpose of the system. As an example, higher frequencies of up to 120 GHz or more may be used as long as the required penetration capacity is achieved. More than three receiving antennas may be employed. In principle, there may be a single transmitting antenna or a plurality of transmitting antennas. Furthermore, a plurality of antennas may be replaced by a moving (e. g. rotating) antenna that effectively provides multiple receiving (and/or sending) locations.

In summary, it is to be noted that the invention provides a method for identifying a fall event of a subject that allows for a reliable classification of fall events.

**Claims**

1. A method for identifying a fall event of a subject from a plurality of frames of three-dimensional radar data covering a time interval, each of the frames comprising three-dimensional point cloud information relating to a point in time, the method comprising the steps of:

   a) determining a location of the subject from the three-dimensional radar data;
   b) defining a local volume around the determined location;
   c) subdividing the local volume into a number of subvolumes;
   d) for each of the plurality of frames determining a number of points for each of the subvolumes, based on the three-dimensional point cloud;
   e) generating a spatio-temporal feature vector from the determined numbers of points;
   f) feeding the feature vector to a supervised machine learning method to obtain a classification result relating to the probability of the fall event of the subject in the covered time interval.

2. The method as recited in claim 1, **characterized in that** the supervised machine learning method is a convolutional neural network.

3. The method as recited in claim 1 or 2, **characterized in that** the classification result is binary.

4. The method as recited in any of claims 1 to 3, **characterized in that** the plurality of frames cover a time interval of at least 2 s, in particular of at least 5 s.

5. The method as recited in one of claims 1 to 4, **characterized in that** the local volume is centered about the determined location.

6. The method as recited in claim 5, **characterized in that** an extension of the local volume is symmetrical about at least two perpendicular planes running through the determined location.

7. The method as recited in claim 6, **characterized in that** the local volume is cylinder-shaped with a cylinder axis extending in a vertical direction.

8. The method as recited in any of claims 1 to 7, **characterized in that** a cylindrical or spherical coordinate system is defined around the determined location and **in that** the subvolumes are defined as cylindrical or spherical voxels.

9. The method as recited in any of claims 1 to 8, **characterized in that** for generating the spatio-temporal feature vector the number of points in a given subvolume is adjusted based on the numbers of points in other subvolumes neighboring the given subvolume in space and/or in time.

10. The method as recited in any of claims 1 to 9, **characterized in that** the feature vector is transformed into a two-dimensional image with multi-valued pixel values and **in that** the two-dimensional image is fed to a convolutional neural network optimized for the processing of image data.

11. The method as recited in any of claims 1 to 10, **characterized in that** identification of the fall event is triggered based on a development of a position of a radar target tracked over time.

12. The method as recited in claim 11, **characterized in that** the point cloud information relating to a given frame of three-dimensional radar data is analyzed for a static characteristic indicative for a potential fall event, that a number of frames including the given frame and frames preceding the given frame are analyzed for a dynamic characteristic indicative for a potential fall event if the static characteristic is present, and that the identification of the fall event is triggered if the dynamic characteristic is present.

13. A computer program comprising instructions which, when the program is executed by a computer, cause the computer to carry out the method of one of claims 1 to 12.

14. An apparatus for identifying a fall event of a subject, comprising

a) a radar system for generating frames of three-dimensional radar data, each of the frames comprising three-dimensional point cloud information relating to a point in time;
b) a first processing module adapted to determine a location of the subject from the three-dimensional radar data;
c) a second processing module adapted to define a local volume around the determined location, to subdivide the local volume into a number of subvolumes and to determine a number of points for each of the subvolumes, based on the three-dimensional point cloud;
d) a third processing module adapted to generate a spatio-temporal feature vector from the determined numbers of points for a number of frames covering a time interval;
e) a machine learning module adapted to process the spatio-temporal feature vector using a supervised machine learning method to obtain a classification result relating to the probability of the fall event of the subject in the covered time interval.

**Fig. 1**

**Fig. 2**

**Fig. 3A**

**Fig. 3B**

**EUROPEAN SEARCH REPORT**

Application Number

EP 24 21 5916

## DOCUMENTS CONSIDERED TO BE RELEVANT

| Category | Citation of document with indication, where appropriate, of relevant passages | Relevant to claim |
|---|---|---|
| X | EP 4 311 487 A1 (INFINEON TECHNOLOGIES AG [DE]) 31 January 2024 (2024-01-31) * paragraphs [0015] - [0018], [0032] - [0056], [0074] - [0103] * ----- | 1-14 |
| X | US 2023/048309 A1 (PASUPULETI RAVI KIRAN [IN] ET AL) 16 February 2023 (2023-02-16) * paragraphs [0008] - [0054] * ----- | 1-14 |
| A | WO 2023/131422 A1 (QUMEA AG [CH]) 13 July 2023 (2023-07-13) * the whole document * ----- | 1-14 |

**CLASSIFICATION OF THE APPLICATION (IPC)**

INV.
G06V10/82
G06V40/10
G06V20/52

**TECHNICAL FIELDS SEARCHED (IPC)**

G06V

The present search report has been drawn up for all claims

| Place of search | Date of completion of the search | Examiner |
|---|---|---|
| The Hague | 6 May 2025 | Miclea, Sorin |

EPO FORM 1503 03.82 (P04C01)

## ANNEX TO THE EUROPEAN SEARCH REPORT
## ON EUROPEAN PATENT APPLICATION NO.

EP 24 21 5916

This annex lists the patent family members relating to the patent documents cited in  the above-mentioned European search report.
The members are as contained in the European Patent Office EDP file on
The European Patent Office is in no way liable for these particulars which are merely given for the purpose of information.

06-05-2025

| Patent document cited in search report | | Publication date | Patent family member(s) | | Publication date |
|---|---|---|---|---|---|
| EP 4311487 | A1 | 31-01-2024 | CN | 117471412 A | 30-01-2024 |
| | | | EP | 4311487 A1 | 31-01-2024 |
| | | | US | 2024037908 A1 | 01-02-2024 |
| US 2023048309 | A1 | 16-02-2023 | US | 2021304007 A1 | 30-09-2021 |
| | | | US | 2023048309 A1 | 16-02-2023 |
| WO 2023131422 | A1 | 13-07-2023 | EP | 4463057 A1 | 20-11-2024 |
| | | | WO | 2023131422 A1 | 13-07-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. THOMMAN** ; **L. ROOS** ; **J. RIEDWEG** ; **N. S. BERNET**. Nationale Prävalenzmessung Sturz und Dekubitus. Nationaler Vergleichsbericht Messung 2022 - Erwachsene. *Nationaler Verein für Qualitätsentwicklung in Spitälern und Kliniken (ANQ)*, 2023
- Automatic fall detection based on doppler radar motion signature. **L. LIU** ; **M. POPESCU** ; **M. SKUBIC** ; **M. RANTZ** ; **T. YARDIBI** ; **P. CUDDIHY**. 2011 5th International Conference on Pervasive Computing Technologies for Healthcare (Pervasive-Health) and Workshops. IEEE, 2011, 222-225
- **M. G. AMIN** ; **Y. D. ZHANG** ; **F. AHMAD** ; **K. D. HO**. Radar signal processing for elderly fall detection: The future for in-home monitoring. *IEEE Signal Processing Magazine*, 2016, vol. 33 (2), 71-80
- **A. HOWARD** ; **M. SANDLER** ; **G. CHU** ; **L.-C. CHEN** ; **B. CHEN** ; **M. TAN** ; **W. WANG** ; **Y. ZHU** ; **R. PANG** ; **V. VASUDEVAN**. *Searching for mobilenetv3*, November 2019